# EUROPEAN PATENT APPLICATION

(11) **EP 4 712 389 A1**
(43) Date of publication of application: **18.03.2026**
(21) Application number: 23936168.6
(22) Date of filing: 11.05.2023
(51) Int. Cl.: H04L 5/00

(54) **ORTHOGONAL TIME FREQUENCY SPACE (OTFS) MODULATION PARAMETER CONFIGURATION METHOD AND APPARATUS**

(71) Applicant: Beijing Xiaomi Mobile Software Co., Ltd., Beijing 100085 (CN)
(72) Inventor: DUAN, Gaoming, Beijing 100085 (CN); CHI, Liangang, Beijing 100085 (CN)
(74) Representative: Gunzelmann, Rainer
(86) International application number: PCT/CN2023/093703
(87) International publication number: WO 2024/229855

(57) **Abstract**

The embodiments of the present disclosure are applicable to the technical field of communications. Disclosed are an OTFS modulation parameter configuration method and apparatus. The method executed by a network device comprises: determining relevant parameters of OTFS modulation; and sending to a terminal device the relevant parameters of the OTFS modulation. Thus, communication may be performed on the basis of relevant parameters of OTFS modulation, and the communication performance can be improved.

## Description

### TECHNICAL FIELD

The disclosure relates to the communication field, in particular to a method for configuring an orthogonal time frequency and space (OTFS) modulation parameter and an apparatus.

### BACKGROUND

In recent years, due to the large-scale development of high speed railway (HSR) and the increasing popularity of vehicle communication systems on highways, wireless communication systems in high-speed mobile environments have received extensive attention.

In high-mobility scenarios, the rapid change in the speed of terminals leads to a rapid change in the wireless transmission environment, resulting in a serious decline in communication performance, which is an urgent problem to be solved.

### SUMMARY

Embodiments of the disclosure provide a method for configuring an orthogonal time frequency and space (OTFS) modulation parameter and an apparatus, which may perform communication based on a relevant parameter of an OTFS modulation and improve communication performance.

According to a first aspect of embodiments of the disclosure, a method for configuring an OTFS modulation parameter is provided. The method is performed by a network device, and includes: the network device determining a relevant parameter of an OTFS modulation; and sending the relevant parameter of the OTFS modulation to a terminal.

In this technical solution, the network device determines the relevant parameter of the OTFS modulation and sends the relevant parameter of the OTFS modulation to the terminal. Thus, communication may be performed based on the relevant parameter of the OTFS modulation, which may improve communication performance.

According to a second aspect of embodiments of the disclosure, a method for configuring an OTFS modulation parameter is provided. The method is performed by a terminal, and includes: receiving a relevant parameter of an OTFS modulation sent by a network device.

According to a third aspect of the embodiments of the disclosure, a communication apparatus is provided, which has part or all of the functions of the terminal in the method described in the first aspect above. For example, the functions of the communication apparatus may include part or all of the functions in the embodiments of the disclosure, or may include the function of independently implementing any one of the embodiments of the disclosure. The functions may be implemented by hardware, or by hardware executing corresponding software. The hardware or software includes one or more units or modules corresponding to the above functions.

In an implementation, the communication apparatus may include a transceiver module and a processing module. The processing module is configured to support the communication apparatus in executing the corresponding functions in the above method. The transceiver module is configured to support communication between the communication apparatus and other devices. The communication apparatus may further include a storage module. The storage module is coupled to the transceiver module and the processing module, and stores necessary computer programs and data for the communication apparatus.

In an implementation, the communication apparatus includes: a processing module, configured to determine a relevant parameter of an OTFS modulation; and a transceiver module, configured to send the relevant parameter of the OTFS modulation to a terminal.

According to a fourth aspect of the embodiments of the disclosure, a communication apparatus is provided, which has part or all of the functions of the terminal in the method described in the second aspect above. For example, the functions of the communication apparatus may include part or all of the functions in the embodiments of the disclosure, or may include the function of independently implementing any one of the embodiments of the disclosure. The functions may be implemented by hardware, or by hardware executing corresponding software. The hardware or software includes one or more units or modules corresponding to the above functions.

In an implementation, the communication apparatus may include a transceiver module and a processing module. The processing module is configured to support the communication apparatus in executing the corresponding functions in the above method. The transceiver module is configured to support communication between the communication apparatus and other devices. The communication apparatus may further include a storage module. The storage module is coupled to the transceiver module and the processing module, and stores necessary computer programs and data for the communication apparatus.

In an implementation, the communication apparatus includes: a transceiver module, configured to receive a relevant parameter of an OTFS modulation sent by a network device.

According to a fifth aspect of the embodiments of the disclosure, a communication apparatus is provided, which includes a processor. When the processor invokes a computer program in a memory, the processor executes the method described in the first aspect above.

According to a sixth aspect of the embodiments of the disclosure, a communication apparatus is provided, which includes a processor. When the processor invokes a computer program in a memory, the processor executes the method described in the second aspect above.

According to a seventh aspect of the embodiments of the disclosure, a communication apparatus is provided, which includes a processor and a memory. The memory stores a computer program. The processor executes the computer program stored in the memory to enable the communication apparatus to execute the method described in the first aspect above.

According to an eighth aspect of the embodiments of the disclosure, a communication apparatus is provided, which includes a processor and a memory. The memory stores a computer program. The processor executes the computer program stored in the memory to enable the communication apparatus to execute the method described in the second aspect above.

According to a ninth aspect of the embodiments of the disclosure, a communication apparatus is provided, which includes a processor and an interface circuit. The interface circuit is configured to receive code instructions and transmit the code instructions to the processor. The processor is configured to run the code instructions to enable the communication apparatus to execute the method described in the first aspect above.

According to a tenth aspect of the embodiments of the disclosure, a communication apparatus is provided, which includes a processor and an interface circuit. The interface circuit is configured to receive code instructions and transmit the code instructions to the processor. The processor is configured to run the code instructions to enable the communication apparatus to execute the method described in the second aspect above.

According to an eleventh aspect of the embodiments of the disclosure, a communication system is provided. The communication system includes the communication apparatuses described in the third and fourth aspects, or the communication apparatuses described in the fifth and sixth aspects, or the communication apparatuses described in the seventh and eighth aspects, or the communication apparatuses described in the ninth and tenth aspects.

According to a twelfth aspect of the embodiments of the disclosure, a computer-readable storage medium is provided, which is configured to store instructions used by the above-mentioned receiving end. When the instructions are executed, the receiving end is enabled to execute the method described in the first aspect above.

According to a thirteenth aspect of the embodiments of the disclosure, a computer-readable storage medium is provided, which is configured to store instructions used by the above-mentioned transmitting end. When the instructions are executed, the transmitting end is enabled to execute the method described in the second aspect above.

According to a fourteenth aspect of the embodiments of the disclosure, a computer program product including a computer program is provided. When the computer program product runs on a computer, the computer is enabled to execute the method described in the first aspect above.

According to a fifteenth aspect of the embodiments of the disclosure, a computer program product including a computer program is provided. When the computer program product runs on a computer, the computer is enabled to execute the method described in the second aspect above.

According to a sixteenth aspect of the embodiments of the disclosure, a chip system is provided, which includes at least one processor and at least one interface, configured to support the receiving end in implementing the functions involved in the first aspect, for example, determining or processing at least one of the data and information involved in the above method. In a possible design, the chip system further includes a memory configured to store necessary computer programs and data for the receiving end. The chip system may be composed of chips, or may include one or more chips and other discrete components.

According to a seventeenth aspect of the embodiments of the disclosure, a chip system is provided, which includes at least one processor and at least one interface, configured to support the receiving end in implementing the functions involved in the second aspect, for example, determining or processing at least one of the data and information involved in the above method. In a possible design, the chip system further includes a memory configured to store necessary computer programs and data for the receiving end. The chip system may be composed of chips, or may include one or more chips and other discrete components.

According to an eighteenth aspect of the embodiments of the disclosure, a computer program is provide, which, when runs on a computer, causes the computer to execute the method described in the first aspect above.

According to a nineteenth aspect of the embodiments of the disclosure, a computer program is provide, which, when runs on a computer, causes the computer to execute the method described in the second aspect above.

### BRIEF DESCRIPTION OF THE DRAWINGS

To better illustrate the technical solutions in the embodiments of the disclosure or the background art, the accompanying drawings required for the embodiments of the disclosure or the background art are described below.
FIG. 1 is a schematic diagram of a communication system provided by the disclosure.
FIG. 2 is a flowchart of a method for configuring an orthogonal time frequency and space (OTFS) modulation parameter according to an embodiment.
FIG. 3 is a flowchart of a method for configuring an OTFS modulation parameter according to an embodiment.
FIG. 4 is a flowchart of a method for configuring an OTFS modulation parameter according to an embodiment.
FIG. 5 is a flowchart of a method for configuring an OTFS modulation parameter according to an embodiment.
FIG. 6 is a flowchart of a method for configuring an OTFS modulation parameter according to an embodiment.
FIG. 7 is a schematic diagram of a communication apparatus according to an embodiment.
FIG. 8 is a schematic diagram of a communication apparatus according to another embodiment.
FIG. 9 is a schematic diagram of a chip according to another embodiment.

### DETAILED DESCRIPTION

The embodiments of the disclosure are described in detail below. Examples of the embodiments are shown in the accompanying drawings, wherein the same or similar reference numerals denote the same or similar elements or elements having the same or similar functions throughout. The embodiments described below with reference to the accompanying drawings are exemplary and are intended to explain the disclosure, but should not be construed as limiting the disclosure. In the description of the disclosure, unless otherwise specified, "/" means "or", for example, A/B may mean A or B; "and/or" herein is only a kind of association relationship describing associated objects, indicating that there may be three kinds of relationships, for example, A and/or B may mean: A exists alone, A and B exist simultaneously, and B exists alone.

The terms used in the embodiments of the disclosure are only for the purpose of describing specific embodiments, and are not intended to limit the embodiments of the disclosure. The singular forms "a", "an" and "the" used in the embodiments of the disclosure and the appended claims are also intended to include the plural forms, unless the context clearly indicates otherwise.

It should be understood that although terms such as first, second, and third may be used in the embodiments of the disclosure to describe various information, the information should not be limited to these terms. These terms are only used to distinguish the same type of information from each other. For example, without departing from the scope of the embodiments of the disclosure, the first information may also be called the second information, and similarly, the second information may also be called the first information. Depending on the context, the words "if" and "when" as used herein may be interpreted as "at the time of..." or "when..." or "in response to determining".

The embodiments of the disclosure are described in detail below. Examples of the embodiments are shown in the accompanying drawings, wherein the same or similar reference numerals denote the same or similar elements throughout. The embodiments described below with reference to the accompanying drawings are exemplary and are intended to explain the disclosure, but should not be construed as limiting the disclosure.

Before introducing the embodiments of the disclosure, some terms in the embodiments of the disclosure are briefly explained first to facilitate the understanding of those skilled in the art.

### 1. Orthogonal time frequency and space (OTFS) modulation

OTFS modulation is a two-dimensional modulation scheme designed in the delay-Doppler (DD) domain. Different from modulation schemes based on the time-frequency (TF) domain, OTFS modulation converts a doubly dispersive channel into an approximately flat-fading channel in the delay-Doppler domain through a series of two-dimensional transformations. In this domain, each symbol in a data frame undergoes the same almost constant fading, thus achieving more significant performance gains than existing modulation schemes (such as OFDM).

To better understand the method and apparatus for method for configuring an OTFS modulation parameter disclosed in the embodiments of the disclosure, the communication system applicable to the embodiments of the disclosure is first described below.

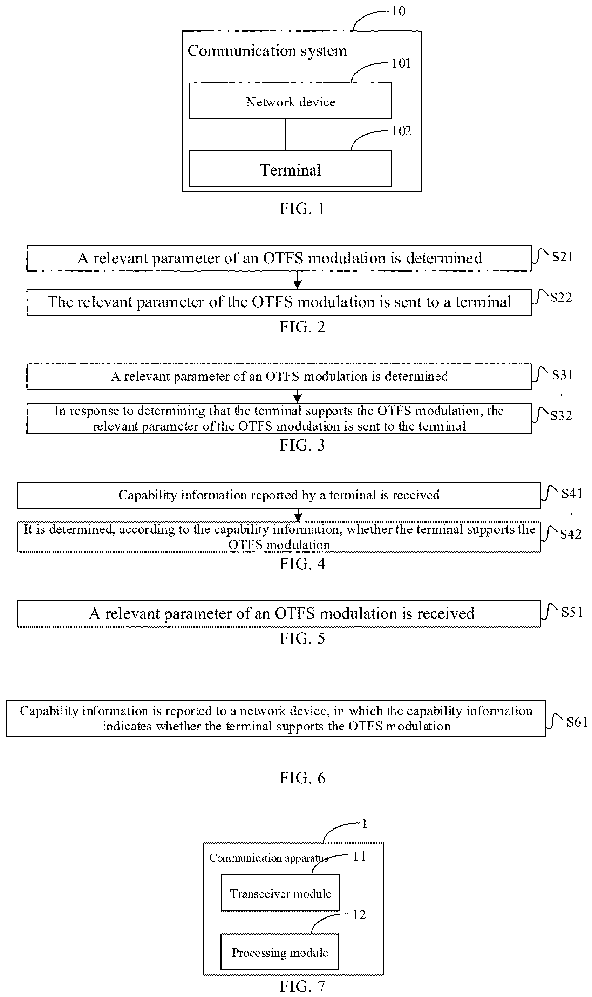

Please refer to FIG. 1, which is a schematic diagram of a communication system provided by an embodiment of the disclosure. This communication system may include but is not limited to one network-side device and one terminal. The number and form of devices shown in FIG. 1 are for illustration only and do not constitute a limitation on the embodiments of the disclosure. In practical applications, the communication system may include two or more network-side devices and two or more terminals. The communication system 10 shown in FIG. 1 includes one network-side device 101 and one terminal 102.

It should be noted that the technical solutions of the embodiments of the disclosure may be applied to various communication systems. For example: a long term evolution (LTE) system, a 5th generation (5G) mobile communication system, a 5G new radio (NR) system, or other future new-type mobile communication systems.

The network device 101 in the embodiments of the disclosure may be an entity on the network side for transmitting or receiving signals. For example, the network device may be an access network device such as a base station. The base station may be a base transceiver station (BTS) in the global system of mobile communication (GSM) system or code division multiple access (CDMA) system, a base station in the wideband code division multiple access (WCDMA) system, an evolved nodeB (eNB or eNodeB) in the long term evolution (LTE) system, a next generation nodeB (gNB) in the 5th generation (5G) mobile communication system, a next-generation base station in the 6th generation (6G) mobile communication system, a base station in the future mobile communication system, etc. The embodiments of the disclosure impose no limitation on the specific technology and specific device form adopted by the network device. For example, the network device may also be a module or unit that completes part of the functions of the base station, such as a central unit (CU) or a distributed unit (DU). Among them, the CU and DU respectively complete part of the protocol stack functions of the base station. In addition, the functions of the CU may be implemented by multiple entities. For example, the functions of the control plane (CP) and user pane (UP) of the CU are separated to form a CU-CP and a CU-UP. For example, the CU-CP and CU-UP may be implemented by different functional entities and connected through an E1 interface, and the CU-CP and CU-UP may be coupled with the DU.

The terminal 102 in the embodiments of the disclosure is an entity on the user side for receiving or transmitting signals, such as a mobile phone. The terminal may also be called user equipment (UE), terminal, mobile station (MS), mobile terminal (MT), etc. The terminal may be a car with communication functions, an intelligent car, a mobile phone, a wearable device, a tablet computer (Pad), a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the disclosure impose no limitation on the specific technology and specific device form adopted by the terminal.

It should be understood that the communication system described in the embodiments of the disclosure is intended to more clearly illustrate the technical solutions of the embodiments of the disclosure, and does not constitute a limitation on the technical solutions provided by the embodiments of the disclosure. As known to those of ordinary skill in the art, with the evolution of system architecture and the emergence of new service scenarios, the technical solutions provided by the embodiments of the disclosure are also applicable to similar technical problem

In addition, to facilitate the understanding of the embodiments of the disclosure, the following explanations are made.

First, in the embodiments of the disclosure, "used for indicating" may include used for direct indication and used for indirect indication. When describing that certain information is used for indicating A, it may include that the information carries A, or may also include that the information directly indicates A or indirectly indicates A, and does not mean that the information must carry A.

The information indicated by the information is referred to as the information to be indicated. In the specific implementation process, there are many ways to indicate the information to be indicated. For example, but not limited to, the information to be indicated may be directly indicated, such as the information to be indicated itself or an index of the information to be indicated. The information to be indicated may also be indirectly indicated by indicating other information, where there is an association relationship between the other information and the information to be indicated. It is also possible to only indicate a part of the information to be indicated, while other parts of the information to be indicated are known or pre-agreed. For example, the indication of specific information may also be realized by means of the pre-agreed (e.g., protocol-specified) arrangement order of various information, thereby reducing the indication overhead to a certain extent.

The information to be indicated may be sent as a whole, or divided into a plurality pieces of sub-information to be sent separately, and the sending periods and/or sending timings of these pieces of sub-information may be the same or different. The specific sending method is not limited in the disclosure. The sending periods and/or sending timings of these pieces of sub-information may be pre-defined, for example, pre-defined according to the protocol.

Second, in the disclosure, the first, second, and various numerical numbers are only for distinction for the convenience of description, and are not used to limit the scope of the embodiments of the disclosure. For example, to distinguish different information, etc.

Third, the embodiments of the disclosure list multiple implementation modes to clearly illustrate the technical solutions of the embodiments of the disclosure. Of course, those skilled in the art may understand that the multiple embodiments provided by the embodiments of the disclosure may be executed independently, or executed together after being combined with the methods of other embodiments in the embodiments of the disclosure, or executed together with some methods in other related technologies independently or after combination; the embodiments of the disclosure do not limit this.

In recent years, with the large-scale development of high speed railway (HSR) and the increasing popularity of vehicle communication systems on highways, wireless communication systems in high-speed mobile environments have received extensive attention. The 5G system is committed to providing bursty broadband services for users in trains or high-mobility vehicles travelling at speeds up to 500 km/h, ensuring a data transmission rate of 150 Mbps. However, most current wireless communication systems may only guarantee high data transmission rates and provide high-quality services in low-speed or medium-speed mobile environments, while their coverage and transmission efficiency are severely limited in high-speed mobile scenarios.

Communication systems in high-mobility scenarios mainly face the following problems: first, fast time-varying fading: increased mobility leads to a significant Doppler frequency shift and spread in the communication system, which seriously degrade communication performance. At the same time, a change in terminal speed causes a change in an attenuation coefficient and a time-varying Doppler spread, and the rapid change in the wireless transmission environment further increases the difficulty of channel analysis and modeling; second, a problem of frequency offset: at a receiving end of the system, the existence of Doppler frequency offset in the received signal leads to frequency mismatch between transmitting and receiving ends. In a multi-carrier system, carrier frequency offset (CFO) destroys the orthogonality between carriers and introduce inter-carrier interference (ICI).

In high-mobility scenarios, the time-varying characteristics of Doppler frequency offset pose new challenges to the accuracy of Doppler estimation and tracking. In high-mobility scenarios, designing a new network architecture to meet its characteristics and ensure communication performance requirements, how to ensure the reliability and accuracy of fast and frequent handovers, and the high penetration loss of signals in a high-speed railway system have become urgent problems to be solved in those scenarios.

In related arts, in high-mobility scenarios, the rapid change in the speed of terminals leads to the rapid change in the wireless transmission environment, resulting in a significant decline in communication performance, which is an urgent problem to be solved.

Based on this, a method for configuring an OTFS modulation parameter is provided in the embodiments of the disclosure. The network device determines a relevant parameter of an OTFS modulation and sends the relevant parameter of the OTFS modulation to the terminal. Thus, communication may be performed based on the relevant parameter of the OTFS modulation, which may improve communication performance.

The method and apparatus for configuring an OTFS modulation parameter provided by the disclosure are described in detail below with reference to the accompanying drawings.

Referring to FIG. 2, FIG. 2 is a flowchart of a method for configuring an OTFS modulation parameter according to an embodiment. As shown in FIG. 2, the method is performed by a network device and may include, but is not limited to, the following steps.

At S21, a relevant parameter of an OTFS modulation is determined.

At S22, the relevant parameter of the OTFS modulation is sent to a terminal.

In the embodiments of the disclosure, the network device may determine the relevant parameter of the OTFS modulation, and send, in a case of determining the relevant parameter of the OTFS modulation, the relevant parameter of the OTFS modulation to the terminal. Thus, communication may be performed based on the relevant parameter of the OTFS modulation, which may improve communication performance.

It may be understood that in high-mobility scenarios, the rapid change in the speed of the terminal leads to the rapid change in the wireless transmission environment, resulting in a significant decline in communication performance. If the OTFS modulation is adopted, since the OTFS modulation may convert a doubly dispersive channel into an approximately flat-fading channel in the delay-Doppler domain via a series of two-dimensional transformations, each symbol in a data frame in the delay-Doppler domain will experience the same almost constant fading, thereby providing more significant performance gains.

In the embodiment of the disclosure, the network device sends the relevant parameter of the OTFS modulation to the terminal, and the communication between the network device and the terminal may be performed based on an OTFS waveform of the OTFS modulation, which may improve communication performance. In addition, in high-mobility scenarios, it may ensure a reliability and accuracy of fast and frequent handovers during communication and reduce signal loss.

In some embodiments, the network device determining the relevant parameter of the OTFS modulation includes: determining auxiliary information; and determining the relevant parameter of the OTFS modulation based on the auxiliary information.

In the embodiment of the disclosure, when determining the relevant parameter of the OTFS modulation, the network device may first determine the auxiliary information, and then determine the relevant parameter of the OTFS modulation according to the determined auxiliary information.

In some embodiments, the auxiliary information includes at least one of:
multipath delay information;
Doppler shift information;
a service delay requirement; or
communication distance information.

In the embodiment of the disclosure, the auxiliary information may include the multipath delay information.

In the embodiment of the disclosure, the auxiliary information may include the Doppler shift information.

In the embodiment of the disclosure, the auxiliary information may include the service delay requirement.

In the embodiment of the disclosure, the auxiliary information may include the communication distance information.

It should be noted that the above embodiments are not exhaustive and are only schematic of some embodiments. Moreover, the above embodiments may be implemented independently or in combination of multiple ones. The above embodiments are only for illustration and are not intended as specific limitations on the protection scope of the embodiments of the disclosure.

In some embodiments, the network device determining the auxiliary information may include: determining the auxiliary information based on an estimation of an uplink reference signal.

In the embodiment of the disclosure, the network device may determine the auxiliary information based on the estimation of the uplink reference signal.

In some embodiments, the network device receives the uplink reference signal sent by the terminal.

In the embodiment of the disclosure, the network device may receive the uplink reference signal sent by the terminal, then determine the auxiliary information based on the estimation of the uplink reference signal.

In some embodiments, the network device determining the auxiliary information may include: receiving the auxiliary information reported by the terminal.

In the embodiment of the disclosure, the network device may receive the auxiliary information reported by the terminal, thereby determining the auxiliary information.

In some embodiments, the network device sends a downlink reference signal to the terminal, in which the downlink reference signal is used by the terminal to determine the auxiliary information.

In the embodiment of the disclosure, the network device may send the downlink reference signal to the terminal, in which the downlink reference signal is used by the terminal to determine the auxiliary information. Thus, the network device may receive the auxiliary information determined and reported by the terminal based on the downlink reference signal.

In some embodiments, the auxiliary information includes the service delay requirement. The network device determining the auxiliary information includes: obtaining the service delay requirement based on quality of service (QoS) awareness.

In the embodiment of the disclosure, in a case were the auxiliary information includes the service delay requirement, the network device may obtain the service delay requirement based on the QoS awareness, thereby determining the service delay requirement.

In some embodiments, the auxiliary information includes the communication distance information, where the network device determining the auxiliary information includes at least one of:
calculating to obtain the communication distance information based on a timing advance (TA);
calculating to obtain the communication distance information based on a delay; or
calculating to obtain the communication distance information based on a path loss.

In the embodiment of the disclosure, in a case where the auxiliary information includes the communication distance information, the network device may calculate to obtain the communication distance information based on the TA, thereby determining the communication distance information.

In some embodiments, the network device may determine the TA based on Message 1 (Msg1).

In the embodiment of the disclosure, in a case where the auxiliary information includes the communication distance information, the network device may calculate to obtain the communication distance information based on the delay, thereby determining the communication distance information.

The network device may determine the delay based on methods in related arts.

In the embodiment of the disclosure, in a case where the auxiliary information includes the communication distance information, the network device may calculate to obtain the communication distance information based on the path loss, thereby determining the communication distance information.

The network device may determine the path loss based on methods in related arts.

In some embodiments, the relevant parameter of the OTFS modulation includes at least one of:
a first set of parameters; or
a second set of parameters.

In the embodiment of the disclosure, the relevant parameter of the OTFS modulation includes the first set of parameters.

In some embodiments, the first set of parameters includes at least one of:
a number of OTFS symbols;
a number of sampling points in a Doppler domain;
an OTFS symbol time; or
a length of a transmission slot.

In the embodiment of the disclosure, the first set of parameters may include the number of OTFS symbols.

In the embodiment of the disclosure, the first set of parameters may include the number of sampling points in the Doppler domain.

In the embodiment of the disclosure, the first set of parameters may include the OTFS symbol time.

In the embodiment of the disclosure, the first set of parameters may include the length of the transmission slot.

In the embodiment of the disclosure, the relevant parameter of the OTFS modulation includes the second set of parameters.

In some embodiments, the second set of parameters includes at least one of:
a number of OTFS sub-carriers;
a number of sampling points in a delay domain;
a sub-carrier spacing; or
a transmission bandwidth.

In the embodiment of the disclosure, the second set of parameters may include the number of OTFS sub-carriers.

In the embodiment of the disclosure, the second set of parameters may include the number of sampling points in the delay domain.

In the embodiment of the disclosure, the second set of parameters may include the sub-carrier spacing.

In the embodiment of the disclosure, the second set of parameters may include the transmission bandwidth.

It should be noted that the above embodiments are not exhaustive and are only schematic of some embodiments. Moreover, the above embodiments may be implemented independently or in combination of multiple ones. The above embodiments are only for illustration and are not intended as specific limitations on the protection scope of the embodiments of the disclosure.

In some embodiments, the network device sending the relevant parameter of the OTFS modulation to the terminal includes at least one of:
sending a radio resource control (RRC) signaling to the terminal, in which the RRC signaling includes the relevant parameter of the OTFS modulation;
sending a medium access control (MAC) control element (CE) to the terminal, in which the MAC CE includes the relevant parameter of the OTFS modulation; or
sending a downlink control information (DCI) signaling to the terminal, in which the DCI signaling includes the relevant parameter of the OTFS modulation.

In the embodiment of the disclosure, the network device sends the relevant parameter of the OTFS modulation to the terminal by sending the RRC signaling to the terminal. The RRC signaling includes the relevant parameter of the OTFS modulation.

In the embodiment of the disclosure, the network device sends the relevant parameter of the OTFS modulation to the terminal by sending the MAC CE to the terminal. The MAC CE includes the relevant parameter of the OTFS modulation.

In the embodiment of the disclosure, the network device sends the relevant parameter of the OTFS modulation to the terminal by sending the DCI signaling to the terminal. The DCI signaling includes the relevant parameter of the OTFS modulation.

It should be noted that the above embodiments are not exhaustive and are only schematic of some embodiments. Moreover, the above embodiments may be implemented independently or in combination of multiple ones. The above embodiments are only for illustration and are not intended as specific limitations on the protection scope of the embodiments of the disclosure.

In this implementation or embodiment, where there is no contradiction, each step may be implemented independently, combined arbitrarily, or their order may be exchanged. Optional manners or optional examples may be combined arbitrarily, and may also be combined arbitrarily with other implementations or embodiments.

By implementing the embodiments of the disclosure, the network device determines the relevant parameter of the OTFS modulation and sends the relevant parameter of the OTFS modulation to the terminal. Thus, communication may be performed based on the relevant parameter of an OTFS modulation, which may improve communication performance.

Referring to FIG. 3, FIG. 3 is a flowchart of a method for configuring an OTFS modulation parameter according to an embodiment. As shown in FIG. 3, the method is performed by a network device and may include, but is not limited to, the following steps.

At S31, a relevant parameter of an OTFS modulation is determined.

For the relevant description of S31, reference may be made to the relevant description in the above embodiments, which is not repeated here.

At S32, in response to determining that the terminal supports the OTFS modulation, the relevant parameter of the OTFS modulation is sent to the terminal.

In the embodiments of the disclosure, the network device may determine whether the terminal supports the OTFS modulation, and send, in a case of determining that the terminal supports the OTFS modulation, the relevant parameter of the OTFS modulation to the terminal.

In some embodiments, the network device may determine whether the terminal supports the OTFS modulation based on a protocol agreement or based on capability reporting of the terminal, which is not specifically limited in the embodiments of the disclosure.

For the relevant description of the network device sending the relevant parameter of the OTFS modulation to the terminal, reference may be made to the relevant description in the above embodiments, which is not repeated here.

In this implementation or embodiment, where there is no contradiction, each step may be implemented independently, combined arbitrarily, or their order may be exchanged. Optional manners or optional examples may be combined arbitrarily, and may also be combined arbitrarily with other implementations or embodiments.

It should be noted that in the embodiments of the disclosure, S31 to S32 may be implemented independently, or implemented together with any other step in the embodiments of the disclosure, such as implemented together with S21 and S22 of the embodiments of the disclosure, which is not limited in the embodiments of the disclosure.

By implementing the embodiments of the disclosure, the network device determines the relevant parameter of the OTFS modulation and sends, in response to determining that the terminal supports the OTFS modulation, the relevant parameter of the OTFS modulation to the terminal. Thus, communication may be performed based on the relevant parameter of an OTFS modulation, which may improve communication performance.

Referring to FIG. 4, FIG. 4 is a flowchart of a method for configuring an OTFS modulation parameter according to an embodiment. As shown in FIG. 4, the method is performed by a network device and may include, but is not limited to, the following steps.

At S41, capability information reported by a terminal is received.

At S41, it is determined, according to the capability information, whether the terminal supports the OTFS modulation.

In the embodiment of the disclosure, the network device may receive the capability information reported by the terminal, and determine whether the terminal supports the OTFS modulation according to the capability information.

In some embodiments, in a case where the network device determines that the terminal supports the OTFS modulation according to the capability information, if the relevant parameter of the OTFS modulation has been determined, the network device may send the relevant parameter of the OTFS modulation to the terminal.

For the relevant descriptions of the network device determining the relevant parameter of the OTFS modulation and sending the relevant parameter of the OTFS modulation to the terminal, reference may be made to the relevant descriptions in the above embodiments, which will not be repeated here.

In this implementation or embodiment, where there is no contradiction, each step may be implemented independently, combined arbitrarily, or their order may be exchanged. Optional manners or optional examples may be combined arbitrarily, and may also be combined arbitrarily with other implementations or embodiments.

It should be noted that in the embodiments of the disclosure, S41 to S42 may be implemented independently, or implemented together with any other step in the embodiments of the disclosure, such as implemented together with S21 and S22 and/or S31 to S32 of the embodiments of the disclosure, which is not limited in the embodiments of the disclosure.

By implementing the embodiments of the disclosure, the network device receives the capability information reported by the terminal, and determines whether the terminal supports the OTFS modulation according to the capability information. Thus, it may be determined whether the terminal supports the OTFS modulation, and further determined whether to send the relevant parameter of the OTFS modulation to the terminal.

Referring to FIG. 5, FIG. 5 is a flowchart of a method for configuring an OTFS modulation parameter according to an embodiment. As shown in FIG. 5, the method is performed by a terminal and may include, but is not limited to, the following steps.

At S51, a relevant parameter of an OTFS modulation is received.

In the embodiments of the disclosure, the terminal may receive the relevant parameter of the OTFS modulation send by the network device. Thus, communication may be performed based on the relevant parameter of the OTFS modulation, which may improve communication performance.

It may be understood that in high-mobility scenarios, the rapid change in the speed of the terminal leads to rapid changes in the wireless transmission environment, resulting in a serious decline in communication performance. If the OTFS modulation is adopted, since the OTFS modulation may convert a doubly dispersive channel into an approximately flat-fading channel in the delay-Doppler domain via a series of two-dimensional transformations, each symbol in a data frame in the delay-Doppler domain will experience the same almost constant fading, thereby providing more significant performance gains.

In the embodiment of the disclosure, the terminal may receive the relevant parameter of the OTFS modulation send by the network device, and the communication between the network device and the terminal may be performed based on an OTFS waveform of the OTFS modulation, which may improve communication performance. In addition, in high-mobility scenarios, it may ensure a reliability and accuracy of fast and frequent handovers during communication and reduce signal loss.

In some embodiments, the terminal sends an uplink reference signal to the network device, in which the uplink reference signal is used for the network device to determine auxiliary information based on an estimation of the uplink reference signal, and the auxiliary information is used for the network device to determine the relevant parameter of the OTFS modulation.

In the embodiment of the disclosure, the terminal may send the uplink reference signal to the network device, in which the uplink reference signal is used for the network device to determine the auxiliary information based on the estimation of the uplink reference signal, and the auxiliary information is used for the network device to determine the relevant parameter of the OTFS modulation. Thus, the uplink reference signal may be used for the network device to determine the auxiliary information based on the estimation of the uplink reference signal, then the network device determines the relevant parameter of the OTFS modulation according to the auxiliary information.

In some embodiments, the terminal reports the auxiliary information to the network device, in which the auxiliary information is used for the network device to determine the relevant parameter of the OTFS modulation.

In the embodiment of the disclosure, the terminal may report the auxiliary information to the network device, in which the auxiliary information is used for the network device to determine the relevant parameter of the OTFS modulation. Thus, the auxiliary information may be used for the network device to determine, according to the auxiliary information, the relevant parameter of the OTFS modulation.

In some embodiments, the network device receives a downlink reference signal sent by the network device, and determines the auxiliary information based on the downlink reference signal.

In the embodiment of the disclosure, the network device may receive a downlink reference signal sent by the network device, then determine the auxiliary information based on the received downlink reference signal.

In some embodiments, the auxiliary information includes at least one of:
multipath delay information;
Doppler shift information;
a service delay requirement; or
communication distance information.

In the embodiment of the disclosure, the auxiliary information may include the multipath delay information.

In the embodiment of the disclosure, the auxiliary information may include the Doppler shift information.

In the embodiment of the disclosure, the auxiliary information may include the service delay requirement.

In the embodiment of the disclosure, the auxiliary information may include the communication distance information.

It should be noted that the above embodiments are not exhaustive and are only schematic of some embodiments. Moreover, the above embodiments may be implemented independently or in combination of multiple ones. The above embodiments are only for illustration and are not intended as specific limitations on the protection scope of the embodiments of the disclosure.

In some embodiments, the relevant parameter of the OTFS modulation includes at least one of:
a first set of parameters; or
a second set of parameters.

In the embodiment of the disclosure, the relevant parameter of the OTFS modulation includes the first set of parameters.

In some embodiments, the first set of parameters includes at least one of:
a number of OTFS symbols;
a number of sampling points in a Doppler domain;
an OTFS symbol time; or
a length of a transmission slot.

In the embodiment of the disclosure, the first set of parameters may include the number of OTFS symbols.

In the embodiment of the disclosure, the first set of parameters may include the number of sampling points in the Doppler domain.

In the embodiment of the disclosure, the first set of parameters may include the OTFS symbol time.

In the embodiment of the disclosure, the first set of parameters may include the length of the transmission slot.

In the embodiment of the disclosure, the relevant parameter of the OTFS modulation includes the second set of parameters.

In some embodiments, the second set of parameters includes at least one of:
a number of OTFS sub-carriers;
a number of sampling points in a delay domain;
a sub-carrier spacing; or
a transmission bandwidth.

In the embodiment of the disclosure, the second set of parameters may include the number of OTFS sub-carriers.

In the embodiment of the disclosure, the second set of parameters may include the number of sampling points in the delay domain.

In the embodiment of the disclosure, the second set of parameters may include the sub-carrier spacing.

In the embodiment of the disclosure, the second set of parameters may include the transmission bandwidth.

It should be noted that the above embodiments are not exhaustive and are only schematic of some embodiments. Moreover, the above embodiments may be implemented independently or in combination of multiple ones. The above embodiments are only for illustration and are not intended as specific limitations on the protection scope of the embodiments of the disclosure.

In some embodiments, the terminal receiving the relevant parameter of the OTFS modulation sent by the network device includes at least one of:
receiving a RRC signaling sent by the network device, in which the RRC signaling includes the relevant parameter of the OTFS modulation;
receiving a MAC CE sent by the network device, in which the MAC CE includes the relevant parameter of the OTFS modulation; or
receiving a DCI signaling sent by the network device, in which the DCI signaling includes the relevant parameter of the OTFS modulation.

In the embodiment of the disclosure, the terminal may receive the relevant parameter of the OTFS modulation sent by the network device by receiving the RRC signaling sent by the network device. The RRC signaling includes the relevant parameter of the OTFS modulation.

In the embodiment of the disclosure, the terminal may receive the relevant parameter of the OTFS modulation sent by the network device by receiving the MAC CE sent by the network device. The MAC CE includes the relevant parameter of the OTFS modulation.

In the embodiment of the disclosure, the terminal may receive the relevant parameter of the OTFS modulation sent by the network device by receiving the DCI signaling sent by the network device. The DCI signaling includes the relevant parameter of the OTFS modulation.

It should be noted that the above embodiments are not exhaustive and are only schematic of some embodiments. Moreover, the above embodiments may be implemented independently or in combination of multiple ones. The above embodiments are only for illustration and are not intended as specific limitations on the protection scope of the embodiments of the disclosure.

In some embodiments, the terminal receiving the relevant parameter of the OTFS modulation sent by the network device includes: receiving the relevant parameter of the OTFS modulation sent by the network device in response to the network device determining that the terminal supports the OTFS modulation.

In the embodiment of the disclosure, the terminal receives the relevant parameter of the OTFS modulation sent by the network device by receiving the relevant parameter of the OTFS modulation sent by the network device in response to the network device determining that the terminal supports the OTFS modulation.

In this implementation or embodiment, where there is no contradiction, each step may be implemented independently, combined arbitrarily, or their order may be exchanged. Optional manners or optional examples may be combined arbitrarily, and may also be combined arbitrarily with other implementations or embodiments.

By implementing the embodiments of the disclosure, the terminal receives the relevant parameter of the OTFS modulation sent by the terminal. Thus, communication may be performed based on the relevant parameter of the OTFS modulation, which may improve communication performance.

Referring to FIG. 6, FIG. 6 is a flowchart of a method for configuring an OTFS modulation parameter according to an embodiment. As shown in FIG. 6, the method is performed by a terminal and may include, but is not limited to, the following step.

At S61, capability information is reported to a network device, in which the capability information indicates whether the terminal supports the OTFS modulation.

In the embodiment of the disclosure, the terminal may report the capability information to the network device, where the capability information indicates whether the terminal supports the OTFS modulation.

In some embodiments, the capability information indicates that the terminal supports the OTFS modulation.

In some embodiments, the capability information indicates that the terminal does not support the OTFS modulation.

In some embodiments, in a case where the capability information indicates that the terminal supports the OTFS modulation, after receiving the capability information of the terminal, the network device may determine that the terminal supports the OTFS modulation, and if the relevant parameter of the OTFS modulation has been determined, may send the relevant parameter of the OTFS modulation to the terminal.

For the relevant descriptions of the network device determining the relevant parameter of the OTFS modulation and sending the relevant parameter of the OTFS modulation to the terminal, reference may be made to the relevant descriptions in the above embodiments, which is not be repeated here.

In this implementation or embodiment, where there is no contradiction, each step may be implemented independently, combined arbitrarily, or their order may be exchanged. Optional manners or optional examples may be combined arbitrarily, and may also be combined arbitrarily with other implementations or embodiments.

It should be noted that in the embodiments of the disclosure, S61 may be implemented independently, or implemented together with any other step in the embodiments of the disclosure, such as implemented together with S51 and S52 of the embodiments of the disclosure, which is not limited in the embodiments of the disclosure.

By implementing the embodiments of the disclosure, the terminal reports the capability information to the network device, in which the capability information indicates whether the terminal supports the OTFS modulation. Thus, the terminal may report the capability information indicating whether the terminal supports the OTFS modulation.

To facilitate the understanding of the embodiments of the disclosure, an exemplary embodiment is provided.

In recent years, with the large-scale development of HSR and the increasing popularity of vehicle communication systems on highways, wireless communication systems in high-speed mobile environments have received extensive attention. The 5G system is committed to providing bursty broadband services for users in trains or high-mobility vehicles travelling at speeds up to 500 km/h, ensuring a data transmission rate of 150 Mbps. However, most current wireless communication systems may only guarantee high data transmission rates and provide high-quality services in low-speed or medium-speed mobile environments, while their coverage and transmission efficiency are severely limited in high-speed mobile scenarios.

Communication systems in high-mobility scenarios mainly face the following problems: first, fast time-varying fading: increased mobility leads to a significant Doppler frequency shift and spread in the communication system, which seriously degrade communication performance. At the same time, a change in terminal speed causes a change in an attenuation coefficient and a time-varying Doppler spread, and the rapid change in the wireless transmission environment further increases the difficulty of channel analysis and modeling; second, a problem of frequency offset: at a receiving end of the system, the existence of Doppler frequency offset in the received signal leads to frequency mismatch between transmitting and receiving ends. In a multi-carrier system, carrier frequency offset (CFO) destroys the orthogonality between carriers and introduce inter-carrier interference (ICI). In high-mobility scenarios, the time-varying characteristics of Doppler frequency offset pose new challenges to the accuracy of Doppler estimation and tracking. In high-mobility scenarios, designing a new network architecture to meet its characteristics and ensure communication performance requirements, how to ensure the reliability and accuracy of fast and frequent handovers, and the high penetration loss of signals in a high-speed railway system have become urgent problems to be solved in those scenarios.

The OTFS modulation is a two-dimensional modulation scheme designed in the DD domain. Different from modulation schemes based on the TF domain, the OTFS modulation converts a doubly dispersive channel into an approximately flat-fading channel in the delay-Doppler domain via a series of two-dimensional transformations. In this domain, each symbol in a data frame undergoes the same almost constant fading, thus achieving more significant performance gains than existing modulation schemes (such as OFDM).

The disclosure proposes a method for configuring an OTFS modulation parameter, enabling the terminal to communicate based on the OTFS waveform in high-speed mobile scenarios.

In some embodiments, the network device (base station) may perform at least one of the following (1 to 7):
1. Obtaining capability information of the terminal, in which the capability information is used to determine whether the terminal supports OTFS modulation.
2. Obtaining auxiliary information reported by the terminal, in which the auxiliary information is used to determine the relevant parameter of the OTFS modulation.

Exemplarily, the auxiliary information reported by the terminal includes multipath delay information and Doppler shift information.

Exemplarily, the terminal obtains the auxiliary information based on a downlink reference signal and reports the auxiliary information to the base station.

3. Parallel to item 2, or the network device determines the relevant parameter of the OTFS modulation based on an estimation of an uplink reference signal.

Exemplarily, the network device obtains an uplink channel based on the uplink reference signal of the terminal.

4. Corresponding to item 2, the auxiliary information reported by the terminal may also include a service delay requirement and communication distance information.

Exemplarily, the service delay requirement may be obtained by the network device based on QoS awareness or reported by the terminal.

Exemplarily, the communication distance may be obtained by the network device by calculating a TA, a delay, or a path loss.

5. Determining a first set of parameters for the OTFS modulation, where the first set include at least one of:
a number of OTFS symbols/a number of sampling points in a Doppler domain;
an OTFS symbol time; or
a length of a transmission slot.

6. Determining a second set of parameters for OTFS modulation, where the second set include at least one of:
a number of OTFS sub-carriers/a number of sampling points in a delay domain;
a sub-carrier spacing; or
a transmission bandwidth.

7. Notifying the terminal of the first and second sets of parameters required for the OTFS modulation via a signaling.

Exemplarily, the signaling may be a RRC signaling, a MAC-CE, or a DCI signaling.

In some embodiments, the terminal performs at least one of the following (1 to 3):
1. Reporting capability information of the terminal to the network device, corresponding to item 1 in the first part.
2. Reporting auxiliary information to the network device, corresponding to item 2 in the first part.
3. Receiving the relevant parameter of the OTFS modulation sent by the network device, corresponding to item 7 in the first part.

It should be noted that the relevant descriptions in the exemplary embodiment have been described in detail in the above embodiments of FIGS. 2 to 6. For details, reference may be made to the relevant descriptions in the above embodiments, which will not be repeated here.

In the embodiments provided by the disclosure above, the methods provided by the embodiments of the disclosure are introduced from the perspectives of the terminal and the network device respectively.

Referring to FIG. 7, FIG. 7 is a schematic diagram of a communication apparatus 1 provided by an embodiment of the disclosure. The communication apparatus 1 shown in FIG. 7 may include a transceiver module 11 and a processing module 12. The transceiver module may include a sending module and/or a receiving module, where the sending module is configured to implement a sending function and the receiving module is configured to implement a receiving function. The transceiver module may implement the sending function and/or the receiving function.

The communication apparatus 1 may be a network device, an apparatus within the network device, or an apparatus that may be used in conjunction with the network device. Or, the communication apparatus 1 may be a terminal, an apparatus within the terminal, or an apparatus that may be used in conjunction with the terminal.

The communication apparatus 1 is configured on a network device side.

The communication apparatus 1 includes a transceiver module 11 and a processing module 12.

The processing module 12 is configured to determine a relevant parameter of an OTFS modulation.

The transceiver module 11 is configured to send the relevant parameter of the OTFS modulation to a terminal.

In some embodiments, the processing module 12 is further configured to determine auxiliary information; and determine the relevant parameter of the OTFS modulation based on the auxiliary information.

In some embodiments, the auxiliary information includes at least one of:
multipath delay information;
Doppler shift information;
a service delay requirement; or
communication distance information.

In some embodiments, the processing module 12 is further configured to determine the auxiliary information based on an estimation of an uplink reference signal.

In some embodiments, the transceiver module 11 is further configured to receive the uplink reference signal sent by the terminal.

In some embodiments, the transceiver module 11 is further configured to receive the auxiliary information reported by the terminal.

In some embodiments, the transceiver module 11 is further configured to send a downlink reference signal to the terminal, in which the downlink reference signal is used by the terminal to determine the auxiliary information.

In some embodiments, the processing module 12 is further configured to obtain the service delay requirement based on QoS awareness.

In some embodiments, the processing module 12 is further configured to perform at least one of:
calculating to obtain the communication distance information based on a TA;
calculating to obtain the communication distance information based on a delay; or
calculating to obtain the communication distance information based on a path loss.

In some embodiments, the relevant parameter of the OTFS modulation includes at least one of:
a first set of parameters; or
a second set of parameters.

In some embodiments, the first set of parameters includes at least one of:
a number of OTFS symbols;
a number of sampling points in a Doppler domain;
an OTFS symbol time; or
a length of a transmission slot.

In some embodiments, the second set of parameters includes at least one of:
a number of OTFS sub-carriers;
a number of sampling points in a delay domain;
a sub-carrier spacing; or
a transmission bandwidth.

In some embodiments, the transceiver module 11 is further configured to perform at least one of:
sending an RRC signaling to the terminal, in which the RRC signaling includes the relevant parameter of the OTFS modulation
sending a MAC CE to the terminal, in which the MAC CE includes the relevant parameter of the OTFS modulation; or
sending a DCI signaling to the terminal, in which the DCI signaling includes the relevant parameter of the OTFS modulation.

In some embodiments, the transceiver module 11 is further configured to in response to determining that the terminal supports the OTFS modulation, send the relevant parameter of the OTFS modulation to the terminal.

In some embodiments, the transceiver module 11 is further configured to receive capability information reported by the terminal.

The processing module 12 is further configured to determine whether the terminal supports the OTFS modulation according to the capability information.

The communication apparatus 1 is configured on a terminal side.

The communication apparatus 1 includes a transceiver module 1.

The transceiver module 1 is configured to receive a relevant parameter of an OTFS modulation sent by a network device.

In some embodiments, the transceiver module 1 is further configured to send an uplink reference signal to the network device, in which the uplink reference signal is used for the network device to determine auxiliary information based on an estimation of the uplink reference signal, and the auxiliary information is used for the network device to determine the relevant parameter of the OTFS modulation.

In some embodiments, the transceiver module 1 is further configured to receive a downlink reference signal sent by the network device.

In some embodiments, the communication apparatus 1 further includes a processing module 12.

The processing module 12 is configured to determine the auxiliary information based on the downlink reference signal.

In some embodiments, the auxiliary information includes at least one of:
multipath delay information;
Doppler shift information;
a service delay requirement; or
communication distance information.

In some embodiments, the relevant parameter of the OTFS modulation includes at least one of:
a first set of parameters; or
a second set of parameters.

In some embodiments, the first set of parameters includes at least one of:
a number of OTFS symbols;
a number of sampling points in a Doppler domain;
an OTFS symbol time; or
a length of a transmission slot.

In some embodiments, the second set of parameters includes at least one of:
a number of OTFS sub-carriers;
a number of sampling points in a delay domain;
a sub-carrier spacing; or
a transmission bandwidth.

In some embodiments, the transceiver module 1 is further configured to perform at least one of:
receiving an RRC signaling sent by the network device, in which the RRC signaling includes the relevant parameter of the OTFS modulation;
receiving a MAC CE sent by the network device, in which the MAC CE includes the relevant parameter of the OTFS modulation; or
receiving a DCI signaling sent by the network device, in which the DCI signaling includes the relevant parameter of the OTFS modulation.

In some embodiments, the transceiver module 1 is further configured to receive the relevant parameter of the OTFS modulation sent by the network device in response to the network device determining that the terminal supports the OTFS modulation.

In some embodiments, the transceiver module 1 is further configured to report capability information to the network device, in which the capability information indicates whether the terminal supports the OTFS modulation.

Regarding the communication apparatus 1 in the above embodiments, the specific manner in which each module performs operations has been described in detail in the embodiments related to the method, and will not be elaborated on here.

The communication apparatus 1 provided in the above embodiments of the disclosure achieves the same or similar beneficial effects as the method for configuring the OTFS modulation parameter provided in some of the above embodiments, which will not be repeated here.

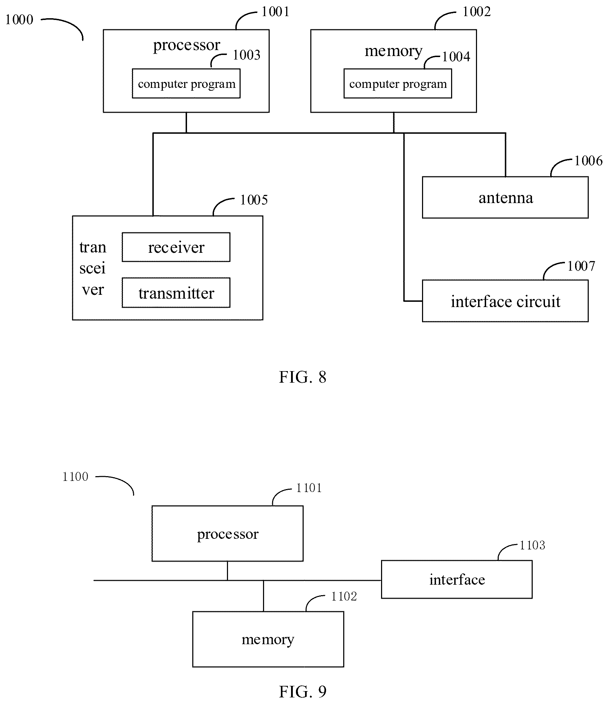

Please refer to FIG. 8, FIG. 8 is a block diagram of a communication apparatus 1000 according to an embodiment of the disclosure. The communication apparatus 1000 may be a network device, or a terminal, or a chip, a chip system, a processor, etc. that supports the network device to implement the method, or a chip, a chip system, a processor, etc. that supports the terminal to implement the method. The communication apparatus 1000 is configured to implement the method in the above method embodiments. For details, please refer to the description in the above method embodiments.

The communication apparatus 1000 may include one or more processors 1001. The processor 1001 may be a general-purpose processor or a special-purpose processor. For example, it may be a baseband processor or a central processing unit. The baseband processor is configured to process communication protocols and communication data, and the central processor is configured to control communication apparatuses (such as base stations, baseband chips, terminals, terminal chips, DU or CU, etc.) to execute computer programs and process computer program data.

In some implementations, the communication apparatus 1000 may also include one or more memories 1002 on which a computer program 1004 is stored. When the computer program 1004 is executed by the processor 1001, the communication apparatus 1000 implements the method in the above method embodiments. In some implementations, the memory 1002 may also store data. The communication apparatus 1000 and the memory 1002 may be set separately or integrated together.

In some implementations, the communication apparatus 1000 may also include a transceiver 1005 and an antenna 1006. The transceiver 1005 may be called a transceiving unit, a transceiving machine, or a transceiving circuit, etc., to achieve a transceiving function. The transceiver 1005 may include a receiver and a transmitter. The receiver may be called a receiver or a receiving circuit, etc., to achieve a receiving function; and the transmitter may be called a transmitter or a transmitting circuit, etc., to achieve a transmitting function.

In some implementations, the communication apparatus 1000 includes one or more interface circuits 1007. The interface circuit 1007 is configured to receive code instructions and transmit the code instructions to the processor 1001. When the code instructions are running on the processor 1001, the communication apparatus 1000 is caused to implement the method in the above method embodiments.

The communication apparatus 1000 is the terminal. The transceiver 1005 and the processor 1001 are configured to execute the methods in FIGS. 2 to 4.

The communication apparatus 1000 is the network device. The transceiver 1005 and the processor 1001 are configured to execute the methods in FIGS. 5 to 6.

In an implementation, the processor 1001 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit or convey signals.

In an implementation, the processor 1001 may store a computer program 1003. When the computer program 1003 is running on the processor 1001, the communication apparatus 1000 is caused to implement the method in the above method embodiments. The computer program 1003 may be solidified in the processor 1001. In this way, the processor 1001 may be implemented in hardware.

In an implementation, the communication apparatus 1000 may include a circuit that may achieve the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal, but the scope of the communication apparatus in the disclosure is not limited to this, and the structure of the communication apparatus may not be restricted by FIG. 8. The communication apparatus may be an independent device or part of a larger device. For example, the communication apparatus may be:
(1) an independent IC, or a chip, or a chip system or a subsystem;
(2) a collection including one or more IC, in some implementation, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to FIG. 9, which is a schematic diagram of a chip provided by an embodiment of the disclosure.

A chip 1100 includes a processor 1101 and an interface 1103. There may be one or more processors 1101, and there may be one or more interfaces 1103.

In the case where the chip is configured to implement the functions of the network device in the embodiments of the disclosure:
the interface 1103 is configured to receive code instructions and transmit the code instructions to the processor; and
the processor 1101 is configured to run the code instructions to execute the method for configuring the OTFS modulation parameter as described in some of the above embodiments.

In the case where the chip is configured to implement the functions of the terminal in the embodiments of the disclosure:
the interface 1103 is configured to receive code instructions and transmit the code instructions to the processor; and
the processor 1101 is configured to run the code instructions to execute the method for configuring the OTFS modulation parameter as described in some of the above embodiments.

In some implementations, the chip 1100 further includes a memory 1102 for storing necessary computer programs and data.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The embodiments of the disclosure further provide a communication system, which includes the communication apparatus as the terminal and the communication apparatus as the network device in the aforementioned embodiment of FIG. 7, or the system includes the communication apparatus as the terminal and the communication apparatus as the network device in the aforementioned embodiment of FIG. 8.

The disclosure also provides a readable storage medium for storing instructions. When the instructions are executed by a computer, functions of any one of the above method embodiments are performed.

The disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of embodiments of the disclosure, but also to indicate an order of precedence.

Term "at least one" in the disclosure may also be described as one or more, and term "a plurality of" may be two, three, four or more, which is not limited in the disclosure. In the embodiments of the disclosure, for a technical feature, the technical features in the technical feature are distinguished by "first", "second", "third", "A", "B", "C", "D", etc. There is no sequence or size order between the technical features described by "first", "second", "third", "A", "B", "C" and "D".

Depending on the context, the words "if" and "when" as used herein may be interpreted as "when", "in a case where" or "in response to determining".

Corresponding relationships indicated by tables in the disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be included within the protection scope of the disclosure. Therefore, the protection scope of the disclosure shall be subject to the protection scope of claims.

## Claims

1. A method for configuring an orthogonal time frequency and space (OTFS) modulation parameter, performed by a network device, comprising:
determining a relevant parameter of an OTFS modulation; and
sending the relevant parameter of the OTFS modulation to a terminal.

2. The method according to claim 1, wherein determining the relevant parameter of the OTFS modulation comprises:
determining auxiliary information; and
determining the relevant parameter of the OTFS modulation based on the auxiliary information.

3. The method according to claim 2, wherein the auxiliary information comprises at least one of:
multipath delay information;
Doppler shift information;
a service delay requirement; or
communication distance information.

4. The method according to claim 2 or 3, wherein determining the auxiliary information comprises:
determining the auxiliary information based on an estimation of an uplink reference signal.

5. The method according to claim 4, wherein before determining the relevant parameter of the OTFS modulation based on the estimation of the uplink reference signal, the method further comprises:
receiving the uplink reference signal sent by the terminal.

6. The method according to claim 2 or 3, wherein determining the auxiliary information comprises:
receiving the auxiliary information reported by the terminal.

7. The method according to claim 6, wherein before receiving the auxiliary information reported by the terminal, the method further comprises:
sending a downlink reference signal to the terminal, wherein the downlink reference signal is used by the terminal to determine the auxiliary information.

8. The method according to claim 3, wherein the auxiliary information comprises the service delay requirement, and determining the auxiliary information comprises:
obtaining the service delay requirement based on quality of service (QoS) awareness.

9. The method according to claim 3, wherein the auxiliary information comprises the communication distance information, and determining the auxiliary information comprises at least one of:
calculating to obtain the communication distance information based on a timing advance (TA);
calculating to obtain the communication distance information based on a delay; or
calculating to obtain the communication distance information based on a path loss.

10. The method according to any one of claims 1-9, wherein the relevant parameter of the OTFS modulation comprises at least one of:
a first set of parameters; or
a second set of parameters.

11. The method according to claim 10, wherein the first set of parameters comprises at least one of:
a number of OTFS symbols;
a number of sampling points in a Doppler domain;
an OTFS symbol time; or
a length of a transmission slot.

12. The method according to claim 10, wherein the second set of parameters comprises at least one of:
a number of OTFS sub-carriers;
a number of sampling points in a delay domain;
a sub-carrier spacing; or
a transmission bandwidth.

13. The method according to any one of claims 1-12, wherein sending the relevant parameter of the OTFS modulation to the terminal comprises at least one of:
sending a radio resource control (RRC) signaling to the terminal, wherein the RRC signaling comprises the relevant parameter of the OTFS modulation;
sending a medium access control (MAC) control element (CE) to the terminal, wherein the MAC CE comprises the relevant parameter of the OTFS modulation; or
sending a downlink control information (DCI) signaling to the terminal, wherein the DCI signaling comprises the relevant parameter of the OTFS modulation.

14. The method according to any one of claims 1-13, wherein sending the relevant parameter of the OTFS modulation to the terminal comprise:
in response to determining that the terminal supports the OTFS modulation, sending the relevant parameter of the OTFS modulation to the terminal.

15. The method according to claim 14, further comprising:
receiving capability information reported by the terminal; and
determining whether the terminal supports the OTFS modulation according to the capability information.

16. A method for configuring an orthogonal time frequency and space (OTFS) modulation parameter, performed by a terminal, comprising:
receiving a relevant parameter of an OTFS modulation sent by a network device.

17. The method according to claim 16, further comprising:
sending an uplink reference signal to the network device, wherein the uplink reference signal is used for the network device to determine auxiliary information based on an estimation of the uplink reference signal, and the auxiliary information is used for the network device to determine the relevant parameter of the OTFS modulation.

18. The method according to claim 16, further comprising:
reporting auxiliary information to the network device, wherein the auxiliary information is used for the network device to determine the relevant parameter of the OTFS modulation.

19. The method according to claim 18, wherein before reporting the auxiliary information to the network device, the method further comprises:
receiving a downlink reference signal sent by the network device; and
determining the auxiliary information based on the downlink reference signal.

20. The method according to any one of claims 17-19, wherein the auxiliary information comprises at least one of:
multipath delay information;
Doppler shift information;
a service delay requirement; or
communication distance information.

21. The method according to any one of claims 16-20, wherein the relevant parameter of the OTFS modulation comprises at least one of:
a first set of parameters; or
a second set of parameters.

22. The method according to claim 21, wherein the first set of parameters comprises at least one of:
a number of OTFS symbols;
a number of sampling points in a Doppler domain;
an OTFS symbol time; or
a length of a transmission slot.

23. The method according to claim 21, wherein the second set of parameters comprises at least one of:
a number of OTFS sub-carriers;
a number of sampling points in a delay domain;
a sub-carrier spacing; or
a transmission bandwidth.

24. The method according to any one of claims 16-23, wherein receiving the relevant parameter of the OTFS modulation sent by the network device comprises at least one of:
receiving a radio resource control (RRC) signaling sent by the network device, wherein the RRC signaling comprises the relevant parameter of the OTFS modulation;
receiving a medium access control (MAC) control element (CE) sent by the network device, wherein the MAC CE comprises the relevant parameter of the OTFS modulation; or
receiving a downlink control information (DCI) signaling sent by the network device, wherein the DCI signaling comprises the relevant parameter of the OTFS modulation.

25. The method according to any one of claims 16-24, wherein receiving the relevant parameter of the OTFS modulation sent by the network device comprises:
receiving the relevant parameter of the OTFS modulation sent by the network device in response to the network device determining that the terminal supports the OTFS modulation.

26. The method according to claim 25, further comprising:
reporting capability information to the network device, wherein the capability information indicates whether the terminal supports the OTFS modulation.

27. A communication apparatus, comprising:
a processing module configured to determine a relevant parameter of an orthogonal time frequency and space (OTFS) modulation; and
a transceiver module configured to send the relevant parameter of the OTFS modulation to a terminal.

28. A communication apparatus, comprising:
a transceiver module module configured to receiving a relevant parameter of an orthogonal time frequency and space (OTFS) modulation sent by a network device.

29. A communication apparatus, comprising a processor and a memory, wherein the memory stores a computer program, and the processor executes the computer program stored in the memory to cause the communication apparatus to perform the method according to any one of claims 1 to 15, or the processor executes the computer program stored in the memory to cause the communication apparatus to perform the method according to any one of claims 16 to 26.

30. A communication apparatus, comprising: a processor and an interface circuit, wherein
the interface circuit is configured to receive code instructions and transmit code instructions to the processor; and
the processor is configured to run the code instructions to perform the method according to any one of claims 1 to 15, or to run the code instructions to perform the method according to any one of claims 16 to 26.

31. A computer-readable storage medium configured to store instructions, wherein when the instructions are executed, the method according to any one of claims 1 to 15 is implemented; or when the instructions are executed, the method according to any one of claims 16 to 26 is implemented.
